# EUROPEAN PATENT APPLICATION

(11) **EP 3 248 842 A1**
(43) Date of publication of application: **29.11.2017**
(21) Application number: 17172725.8
(22) Date of filing: 24.05.2017
(51) Int. Cl.: B60R 11/04, B60R 1/00, B60R 1/12

(54) **MULTIFUNCTIONAL ELECTRONIC ARMATURE**

(30) Priority: 26.05.2016 US 201615165022
(71) Applicant: Dura Operating, LLC, Auburn Hills, MI 48326 (US)
(72) Inventor: THOMPSON, Aaron Evans, Grand Blanc, MI Michigan 48439 (US); UNVEREN, Cumhur, Commerce Township, MI Michigan 48390 (US)
(74) Representative: Bungartz Christophersen Partnerschaft mbB Patentanwälte

(57) **Abstract**

A multifunctional electronic armature (10) for a motor vehicle includes a housing (24) mounted to the motor vehicle, wherein the housing articulates from a first position where the housing is flush with the outer trim or body panel (14) of the motor vehicle and a second position where the housing is extended from the outer trim or body panel of the motor vehicle, a first electronic device (42) mounted within the housing that is concealed when the housing is in the first position and that is exposed when the housing is in the second position, and a second electronic device (46) mounted within the housing that is concealed when the housing is in the first position and that is exposed when the housing is in the second position.

## Description

### FIELD

The invention relates generally to a multifunctional electronic armature for a motor vehicle that replaces a side-view mirror, and more particularly to an armature that moves between an exposed position and a concealed position and that has image capturing and signaling capabilities to replace a side-view mirror and add additional functionality.

### BACKGROUND

The statements in this section merely provide background information related to the present disclosure and may or may not constitute prior art.

Motor vehicles have been designed with increasingly advanced technologies aimed at improving the safety, efficiency, and performance of the motor vehicle. Examples of such technologies include advanced driver assistance systems and human machine interface systems. Generally, advanced driver assistance systems automate, adapt, or enhance vehicle systems in order to increase vehicle safety and/or operator driving performance. Advanced driver assistance systems are designed to avoid accidents by offering technologies that alert the driver to potential problems or to avoid collisions by implementing safeguards, such as autonomously controlling the vehicle. Operator driving performance may be improved by using features that enhance certain systems, such as automated lighting, automated parking, adaptive cruise control, automated braking, or improved blind spot elimination using camera technology. Human machine interface systems generally include systems that provide graphics-based visualization of a control system, either to the user of the motor vehicle or to an individual external to the motor vehicle. An example of such a device is a projector system that projects images onto or around the motor vehicle to communicate information regarding the status of the motor vehicle.

The addition of these advanced technologies to the motor vehicle in turn requires a range of additional hardware to implement these systems. Examples of this hardware include rear-view side cameras, surround-view cameras, sensors, projectors, etc. Thus, while advanced driver assistance systems and human machine interface systems are useful for their intended purpose, there is a constant challenge in packaging and controlling these systems efficiently while not degrading the drivability, fuel efficiency, and appearance of the motor vehicle. Accordingly, a need exists for a device that effectively houses and controls these advanced technologies.

### SUMMARY

A multifunctional electronic armature for a motor vehicle is provided. The multifunctional electronic armature may replace the traditional side-view mirror of the motor vehicle. The multifunctional electronic armature includes a housing mounted to the motor vehicle, wherein the housing articulates from a first position where the housing is flush with the outer trim or body panel of the motor vehicle and a second position where the housing is extended from the outer trim or body panel of the motor vehicle, a first electronic device mounted within the housing that is concealed when the housing is in the first position and that is exposed when the housing is in the second position, and a second electronic device mounted within the housing that is concealed when the housing is in the first position and that is exposed when the housing is in the second position.

In one aspect, the first electronic device is a rear-view side camera.

In another aspect, the second electronic device is a turn signal indicator.

In another aspect, a surround-view camera is mounted within the housing that is concealed when the housing is in the first position and that is exposed when the housing is in the second position.

In another aspect, a projector is mounted within the housing that is concealed when the housing is in the first position and that is exposed when the housing is in the second position.

In another aspect, the housing substantially surrounds the first electronic device and the second electronic device.

In another aspect, an electronically controlled actuator is connected to the housing for moving the housing between the first position and the second position.

In another aspect, the housing includes a pivot point connected to the motor vehicle and the actuator pivots the housing between the first position and the second position.

In another aspect, the housing includes an outer surface visible relative to an exterior of the motor vehicle when the housing is in the first and second positions and an inner surface visible relative to an exterior of the motor vehicle only when in the second position.

In another aspect, the inner surface defines a first aperture for receiving the first electronic device and a second aperture for receiving the second electronic device.

In another aspect, the outer surface includes a decorative feature or a badge indicative of a manufacturer of the motor vehicle.

In another aspect, the outer surface has an apex that points towards a front of the motor vehicle when the housing is in the second position to create an aerodynamic profile.

In another aspect, the housing is mounted to the outer trim or body panel at a widest point of the motor vehicle.

In another aspect, the first emitter is a turn signal indicator, the first sensor is a rear-view side camera, the second emitter is a projector, and the second sensor is a surround-view camera.

In another aspect, the housing substantially surrounds the first electronic device and the second electronic device.

Further aspects, examples, and advantages will become apparent by reference to the following description and appended drawings wherein like reference numbers refer to the same component, element or feature.

### DRAWINGS

The drawings described herein are for illustration purposes only and are not intended to limit the scope of the present disclosure in any way.
FIG. 1 is a top view of an exemplary motor vehicle having a multifunctional electronic armature according to the principles of the present disclosure;
FIG. 2A is a top, back perspective view of the multifunctional electronic armature in a first position;
FIG. 2B is a top, back perspective view of the multifunctional electronic armature in a second position;
FIG. 2C is a bottom, back perspective view of the multifunctional electronic armature in the second position;
FIG. 2D is a top, front perspective view of the multifunctional electronic armature in the second position; and
FIG. 3 is a schematic diagram of the multifunctional electronic armature.

### DETAILED DESCRIPTION

The following description is merely exemplary in nature and is not intended to limit the present disclosure, application, or uses.

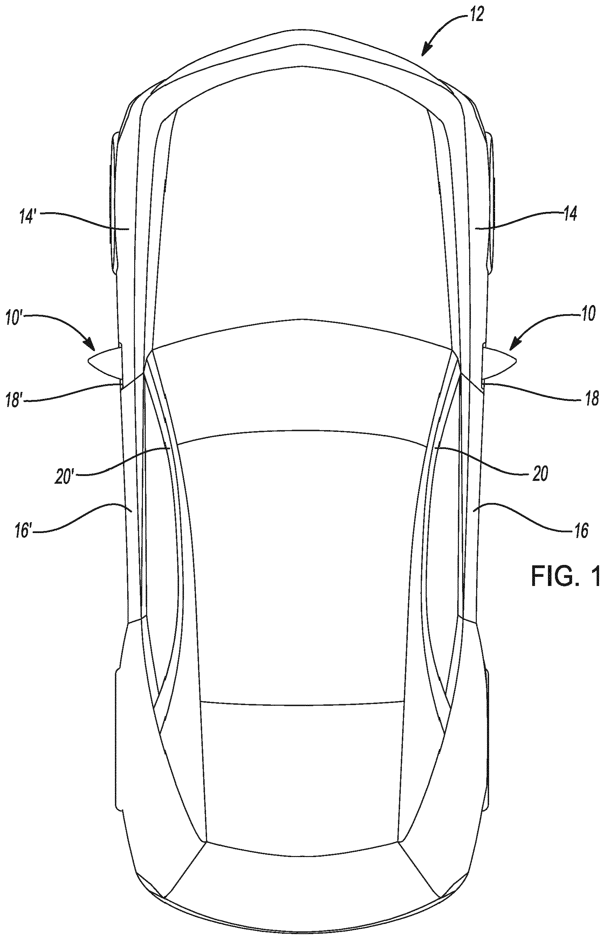

With reference to FIG. 1, a pair of right and left multifunctional electronic armatures are illustrated and indicated by reference numbers 10 and 10', respectively. The armatures 10, 10' are pivotally mounted to a motor vehicle 12. In the example provided, the motor vehicle 12 is illustrated as a passenger vehicle. However, the motor vehicle 12 may be a truck, sport utility vehicle, van, motor home, or any other type of vehicle without departing from the scope of the present disclosure. Relative to an operator of the motor vehicle 12, the motor vehicle 12 includes a right front quarter panel or outer body trim 14 and a left front quarter panel or outer body trim 14'. The right and left outer body trim 14, 14' are forward of right and left front doors 16, 16', respectively. A slot 18 is formed in the right outer body trim 14 and is sized to receive the armature 10 therein. Likewise, a slot 18' is formed in the left outer body trim 14' and is sized to receive the armature 10' therein. The slots 18, 18' are preferably aligned with right and left A-pillars 20, 20', respectively. Thus, the armatures 10, 10' are each located approximately where a side-view mirror would be located in a conventional motor vehicle. In one embodiment, the armatures 10, 10' are mounted to the motor vehicle 12 at a widest point of the motor vehicle 12.

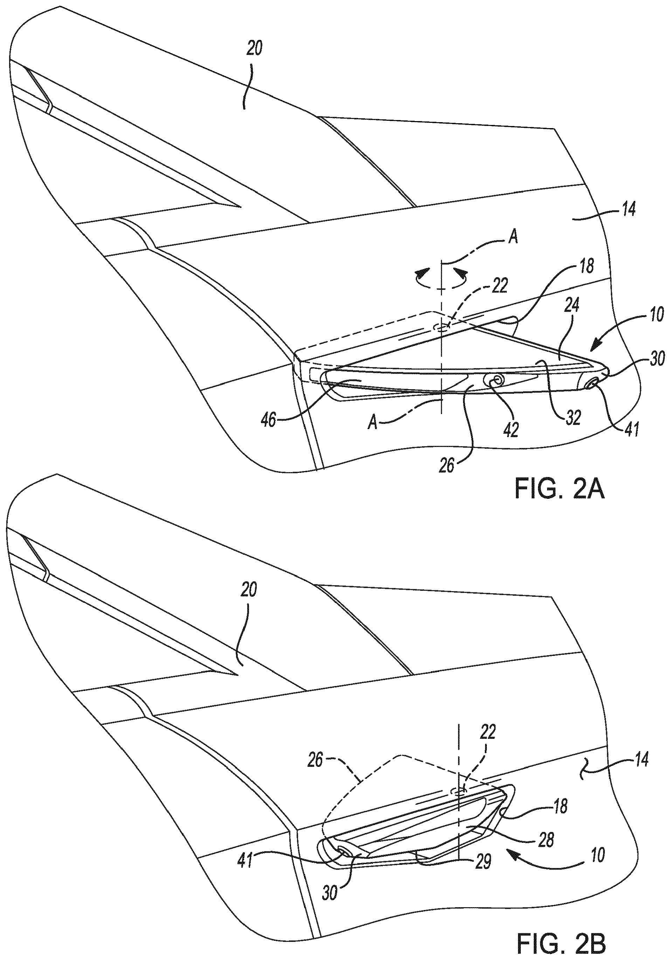

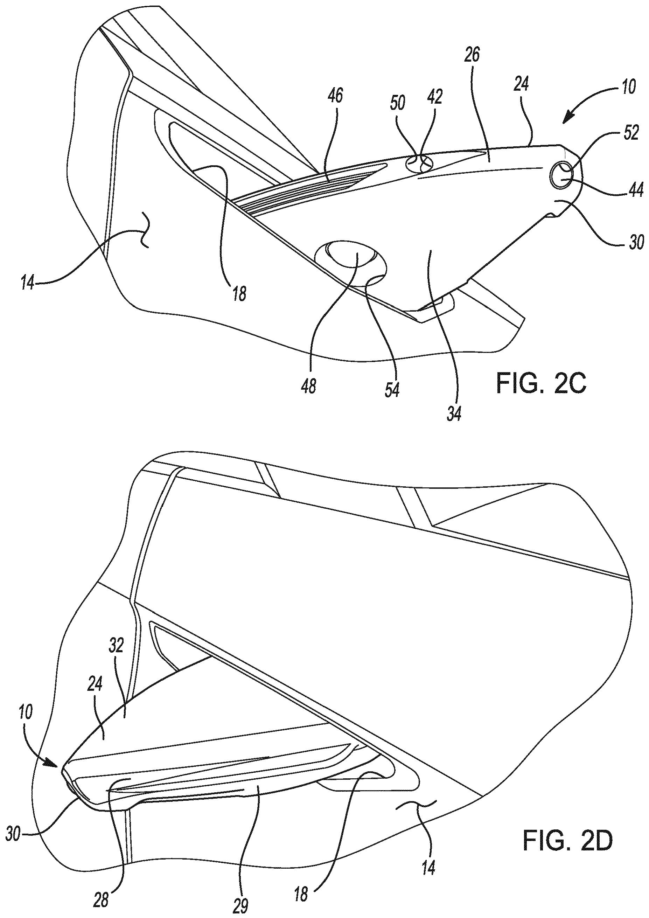

Turning to FIGS. 2A - 2D, the armature 10 is shown in two configurations. As the armatures 10, 10' are substantially identical, only the right side armature 10 will hereinafter be described in detail, it being understood that the description of the armature 10 substantially applies to the armature 10'. The armature 10 is pivotally mounted to the motor vehicle 12 at a pivot point 22. The armature 10 is pivoted at the pivot point 22 about an axis A-A between a first position or concealed position, shown in FIG. 2A, and a second position or extended position, shown in FIGS. 2B - 2D. The armature 10 includes a housing 24 having an inner or back surface 26 and an outer or forward surface 28. The forward surface 28 may have a decorative feature or a badge indicative of a manufacturer of the motor vehicle 12 or may include an apex 29 to create an aerodynamic profile. A portion of the back surface 26 or an end surface 30 connects the back surface 26 and the forward surface 28. The end surface 30 is angled with respect to the back surface 26 and the forward surface 28. The housing 24 further includes a top surface 32 and a bottom surface 34, shown in FIG. 2C. The top and bottom surfaces 32, 34 are substantially planar and perpendicular to the axis A-A.

In the first or concealed position illustrated in FIG. 2A, the armature 10 is substantially hidden within the motor vehicle 12 so that the back surface 26 is concealed while only the forward surface 28 is visible relative to an exterior of the motor vehicle 12. Preferably, the forward surface 28 is substantially flush with the outer body trim 14. In the second or extended position illustrated in FIGS. 2B - 2D, the armature 10 is extended out from the motor vehicle 12 so that the back surface 26 faces rearward relative to the motor vehicle 12, the forward surface 28 faces forward relative to the motor vehicle 12, and the end surface 30 extends out away from the outer body trim 14 of the motor vehicle 12.

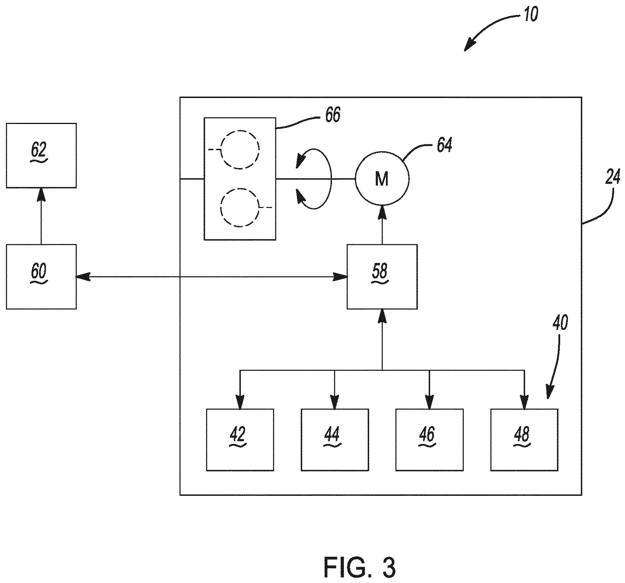

Turning to FIG. 3, and with continued reference to FIGS. 2A - 2D, the armature 10 includes a plurality of electronic devices 40 housed within the housing 24. The electronic devices 40 may generally be categorized into sensors for capturing information and emitters, indicators, or human machine interface (HMI) systems that provide information regarding a status of the motor vehicle 12. The sensors operate to sense multiple sets of data for use by an operator or control unit of the motor vehicle while the emitters, indicators, and HMI systems emits or projects multiple sets of information to an observer external to the motor vehicle. Various combinations of electronic devices 40 may be housed within the armature 10 depending on the functionality desired. However, in a preferred embodiment, the plurality of electronic devices 40 includes a rear-view side camera 42, a surround-view camera 44, a turn signal 46, and a projector 48.

The rear-view side camera 42 is disposed within an aperture 50 in the housing 24 of the armature 10 disposed on the back surface 26. The rear-view side camera 42 is configured to capture rear-view images relative to the motor vehicle 12 when the armature 10 is extended. The surround-view camera 44 is disposed within an aperture 52 in the housing 24 on the end surface 30. The surround-view camera 44 is configured to capture a wide field of view around the side of the motor vehicle 12 when the armature 10 is extended. The field of view captured by the surround-view camera 44 is combined with other fields of view from other cameras to generate a surround-view of the motor vehicle 12. The turn signal 46 is disposed on the back surface 26 and may be activated to indicate a desired turn. The projector 48 is disposed in an aperture 54 formed in the bottom surface 34 of the armature 10. The projector 48 is configured to project an image or a dynamic image on a surface to a side of the motor vehicle 12 on which the motor vehicle 12 is operating. Examples of images include turn signal arrows, messages, etc.

Each of the electronic devices 40 is in electronic communication with an armature control unit (ACU) 58 via any wired connection, for example a bus network. The ACU 58 is disposed within the armature 10 and is a non-generalized, electronic control device having a preprogrammed digital computer or processor, memory or non-transitory computer readable medium used to store data such as control logic or instructions, and a plurality of input/output peripherals. The processor is configured to execute the control logic or instructions. The ACU 58 is in electronic communication with a vehicle control module 60 disposed in the motor vehicle 12. The vehicle control module 60 may be an engine control module, transmission control module, body control module, etc. The vehicle control module 60 may be in communication with a display device 62. The display device 62 is located in the motor vehicle 12 and is viewable by operator of the motor vehicle 12. The display device 62 may be located in an instrument panel, heads-up-display, or dashboard of the motor vehicle 12 or may be a separate, standalone display screen. Images from the rear-view side camera 42 and the surround-view camera 44 may be displayed on the display device 62.

The armature 10 further includes an actuator 64 housed within the housing 24 to move the armature 10 between the concealed and extended positions. The actuator 64 is preferably an electric motor and, upon command, actuates a pivot connection 66 that articulates the armature 10 about the pivot point 22.

The armature 10 effectively replaces the traditional side-view mirror assembly with a fully automatic, modular component. When the motor vehicle 12 is moving, the armature 10 is extended and the electronic devices 40 are exposed and in their operating positions thus providing additional utility beyond a traditional side-view mirror. Since no mirror is needed, the armature 10 also has a reduced cross-sectional profile relative to a traditional mirror, thus reducing drag and increasing fuel efficiency. When the motor vehicle 12 is stopped or parked, the armature 10 moves to the concealed position, thus concealing the electronic devices 40 and protecting the armature 10 from damage.

The description of the invention is merely exemplary in nature and variations that do not depart from the gist of the invention are intended to be within the scope of the invention. Such variations are not to be regarded as a departure from the spirit and scope of the invention.

## Claims

1. A multifunctional electronic armature (10) for a motor vehicle (12), the motor vehicle (12) having an outer trim or body panel (14), the multifunctional electronic armature (10) comprising:
a housing (24) mounted to the motor vehicle (12), wherein the housing (24) articulates from a first position where the housing (24) is flush with the outer trim or body panel (14) of the motor vehicle (12) and a second position where the housing (24) is extended from the outer trim or body panel (14) of the motor vehicle (12);
a first electronic device mounted within the housing (24) that is concealed when the housing (24) is in the first position and that is exposed when the housing (24) is in the second position; and
a second electronic device mounted within the housing (24) that is concealed when the housing (24) is in the first position and that is exposed when the housing (24) is in the second position.

2. The multifunctional electronic armature (10) of claim 1 wherein the first electronic device is a rear-view side camera (42) and/or the second electronic device is a turn signal indicator (46).

3. The multifunctional electronic armature (10) of one of the preceding claims further comprising a surround-view camera (44) mounted within the housing (24) that is concealed when the housing (24) is in the first position and that is exposed when the housing (24) is in the second position.

4. The multifunctional electronic armature (10) of one of the preceding claims further comprising a projector (48) mounted within the housing (24) that is concealed when the housing (24) is in the first position and that is exposed when the housing (24) is in the second position.

5. The multifunctional electronic armature (10) of one of the preceding claims wherein the housing (24) substantially surrounds the first electronic device and the second electronic device.

6. The multifunctional electronic armature (10) of one of the preceding claims further comprising an electronically controlled actuator (64) connected to the housing (24) for moving the housing (24) between the first position and the second position.

7. The multifunctional electronic armature (10) of claim 6 wherein the housing (24) includes a pivot point (22) connected to the motor vehicle (12) and the actuator (64) pivots the housing (24) between the first position and the second position.

8. The multifunctional electronic armature (10) of one of the preceding claims wherein the housing (24) includes an outer surface (28) visible relative to an exterior of the motor vehicle (12) when the housing (24) is in the first and second positions and an inner surface (26) visible relative to an exterior of the motor vehicle (12) only when in the second position.

9. The multifunctional electronic armature (10) of claim 8 wherein the inner surface (26) defines a first aperture for receiving the first electronic device and a second aperture for receiving the second electronic device.

10. The multifunctional electronic armature (10) of claims 8 or 9 wherein the outer surface (28) has an apex (29) that points towards a front of the motor vehicle (12) when the housing (24) is in the second position to create an aerodynamic profile.

11. A multifunctional electronic armature (10) for a motor vehicle (12), the motor vehicle (12) having an outer trim or body panel (14), the multifunctional electronic armature (10) comprising:
a housing (24) mounted to the motor vehicle (12) and having an inner surface (26), an outer surface (28), and a bottom surface (34), wherein the housing (24) articulates from a closed position where the outer surface (28) is flush with the outer trim or body panel (14) of the motor vehicle (12) and the inner surface (26) and the bottom surface (34) are disposed within the motor vehicle (12) and an extended position where the housing (24) is extended from the outer trim or body panel (14) of the motor vehicle (12);
a first sensor mounted within the housing (24) in a first opening in the inner surface (26) of the housing (24), wherein the first sensor senses a first set of data for use by an operator of the motor vehicle (12);
a first emitter mounted within the housing (24) in a second opening in the inner surface (26) of the housing (24), wherein the first emitter emits a first set of information to an observer external to the motor vehicle (12); and
a second emitter mounted within the housing (24) in a third opening in the bottom surface (34) of the housing (24), wherein the second emitter emits a second set of information to the observer.

12. The multifunctional electronic armature of claim 11 wherein the housing is mounted to the outer trim or body panel at a widest point of the motor vehicle.

13. The multifunctional electronic armature (10) of claims 11 or 12 wherein the inner surface (26) includes a first portion that is disposed substantially perpendicular to the outer trim or body panel (14) of the motor vehicle (12) facing a rear of the motor vehicle (12) when the housing (24) is in the second position and the inner surface (26) includes a second portion that is disposed substantially parallel to the outer trim or body panel (14) of the motor vehicle (12) facing away from the motor vehicle (12) when the housing (24) is in the second position and wherein the first sensor is disposed in the first portion of the inner surface (26).

14. The multifunctional electronic armature (10) of claim 13 further comprising a second sensor mounted within the housing (24) in a fourth opening in the second portion of the inner surface (26) of the housing (24), wherein the second sensor senses a second set of data for use by the operator of the motor vehicle (12).

15. A multifunctional electronic armature (10) for a motor vehicle (12), the motor vehicle (12) having an outer trim or body panel (14), the multifunctional electronic armature comprising:
a housing (24) pivotally mounted to the motor vehicle (12), wherein the housing (24) articulates from a first position where the housing (24) is substantially flush with the outer trim or body panel (14) of the motor vehicle (12) and a second position where the housing (24) is extended from the outer trim or body panel (14) of the motor vehicle (12);
an actuator (64) connected to the housing (24) for pivotally moving the housing (24) between the first position and the second position;
a rear-view side camera (42) mounted within the housing (24) that is concealed when the housing (24) is in the first position and that is exposed when the housing (24) is in the second position;
a turn signal mounted within the housing (24) that is concealed when the housing (24) is in the first position and that is exposed when the housing (24) is in the second position;
a projector (48) mounted within the housing (24) that is concealed when the housing (24) is in the first position and that is exposed when the housing (24) is in the second position; and
a surround-view camera (44) mounted within the housing (24) that is concealed when the housing (24) is in the first position and that is exposed when the housing (24) is in the second position.
